# EUROPÄISCHE PATENTSCHRIFT

(11) **EP 2 299 079 B1**
(45) Veröffentlichungstag und Bekanntmachung des Hinweises auf die Patenterteilung: **10.10.2012**
(21) Anmeldenummer: 10173662.7
(22) Anmeldetag: 23.08.2010
(51) Int. Cl.: F01N 3/20

(54) **Filtereinsatz**
Filter insert
Installation de filtre

(30) Priorität: 01.09.2009 DE 102009039567
(43) Veröffentlichungstag der Anmeldung: 23.03.2011
(73) Patentinhaber: Mahle International GmbH, 70376 Stuttgart (DE)
(72) Erfinder: Schadler, Werner, 8430 Seggauberg (AT); Amtmann, Markus, 73527 Schwäbisch Gmünd (DE); Erlach, Hans, 9125 Kühnsdorf (AT)
(74) Vertreter: BRP Renaud & Partner

(56) Entgegenhaltungen:
- EP-A1- 1 925 354
- WO-A1-2007/017080
- WO-A1-2007/141312
- DE-U1-202007 006 636
- FR-A1- 2 915 185

## Beschreibung

Die vorliegende Erfindung betrifft einen Filtereinsatz zum Einsetzen in einen Tank, insbesondere in einen Harnstofftank. Die Erfindung betrifft außerdem einen Einsatz mit einem derartigen Filtereinsatz sowie einen Tank mit einem derartigen Einsatz bzw. Filtereinsatz.

Um einen Schadstoffausstoß, insbesondere bei Kraftfahrzeugen, nachhaltig senken zu können, wird heutzutage das sogenannte SCR-Verfahren angewendet, welches dazu beiträgt die Stickoxidemission bei Dieselkraftfahrzeugen zu senken. Der für die SCR-Reaktion benötigt Ammoniak wird nicht direkt, das heißt in reiner Form verwendet, sondern üblicherweise in Form einer wässrigen Harnstofflösung. Aus dieser Hamstofflösung entstehen durch eine Hydrolysereaktion Ammoniak und Kohlendioxid, wobei der so erzeugte Ammoniak einem speziellen SCR-Katalysator bei entsprechender Temperatur mit den Stickoxiden des Abgases reagieren kann. Der Verbrauch an Harnstofflösung ist dabei abhängig von der Rohemission und insbesondere auch eines Belastungszustandes des Kraftfahrzeuges ist, so dass stets ein gewisses Volumen an Harnstofflösung in einem dafür vorgesehenen Tank mitgeführt werden muss. Da die Harnstofflösung zur Verdünnung Wasser beinhaltet, kann bei extremen Temperaturen die Gefahr bestehen, dass die wässrige Harnstofflösung im dafür vorgesehenen Tank gefriert und dadurch die zur Stickoxidsenkung notwendige SCR-Reaktion nicht mehr ablaufen kann. Es ist somit zum zuverlässigen Betrieb und zur Einhaltung der gesetzlich festgeschriebenen Abgasnormen unbedingt erforderlich, dass das Gefrieren der Harnstofflösung zuverlässig verhindert wird. Da in den bekannten Harnstofftanks üblicherweise auch Filtereinrichtungen zur Filtration der wässrigen Harnstofflösung vorgesehen sind, und diese bei geringen Temperaturen zum Verstopfen neigen können, ist zudem dafür Sorge zu tragen, dass auch derartige Filtereinrichtungen bei allen auftretenden Temperaturen problemlos und einwandfrei arbeiten.

Aus der WO 2007/141312 A1 ist ein Filtereinsatz zum Einsetzen in einen Tank, insbesondere in einen UREA-Tank bekannt mit einem, zumindest einen Einlass und zumindest einen Auslass aufweisenden Gehäuse sowie einer Filtereinrichtung zum Filtern der im Tank gespeicherten Flüssigkeit. Zudem ist eine Heizeinrichtung vorgesehen, die das Gehäuse des Filtereinsatzes im Bereich des Einlasses und der Filtereinrichtung beheizt.

Aus der EP 1 925 354 A1 ist eine katalytische Reduktionseinrichtung für die katalytische Reduktion von Stickoxiden in Abgasen bekannt.

Die vorliegende Erfindung beschäftigt sich primär mit dem Problem, einen Filtereinsatz zum Einsetzen in einen Tank, insbesondere in einen UREA-Tank, anzugeben, der unabhängig von üblicherweise austretenden Außentemperaturen funktionsfähig ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Filtereinsatz zum Einsetzen in einen Tank, insbesondere in einen UREA-Tank (Harnstofftank) großflächig, insbesondere jedoch im Bereich eines Einlasses und eines Auslasses sowie einer Filtereinrichtung zu beheizen, und dadurch auch bei geringen Außentemperaturen eine zuverlässige Funktionsweise des Filtereinsatzes zu gewährleisten. Der erfindungsgemäße Filtereinsatz weist dabei ein Gehäuse mit zumindest einem Einlass und zumindest einem Auslass auf, wobei zwischen diesen zumindest eine Filtereinrichtung zum Filtern der im Tank gespeicherten Flüssigkeit, insbesondere des Harnstoffs, angeordnet ist. Die erfindungsgemäße Heizeinrichtung beheizt dabei das Gehäuse des Filtereinsatzes und zwar zumindest im Bereich des Einlasses, des Auslasses und der Filtereinrichtung, sodass selbst bei geringen Temperaturen die volle Funktionsfähigkeit des Filtereinsatzes gewährleistet werden kann. Bisher waren beispielsweise Heizeinrichtungen bekannt, die den Harnstoff im Tank, nicht jedoch den Auslass des Filtereinsatzes beheizt haben, so dass bei geringen Temperaturen der sich im Bereich des Auslass befindliche Harnstoff gefroren ist, was ebenfalls unmittelbar zur Funktionsuntüchtigkeit des Filtereinsatzes führte. Durch die erfindungsgemäße Ausbildung des Filtereinsatzes, bei welchem sowohl der Einlass, der Auslass sowie die dazwischen liegende Filtereinrichtung beheizt werden können, ist es möglich, die volle Funktionsfähigkeit des Filtereinsatzes bei tiefen Temperaturen zu gewährleisten. Hierbei weist das Gehäuse des Filtereinsatzes im Bereich des wenigstens einen Einlasses, des wenigstens einen Auslasses und der Filtereinrichtung Wärmeleitkörper auf, die wärmeübertragend mit dem wenigstens einen Heizelement der Heizeinrichtung verbunden sind. Derartige Wärmeleitkörper ermöglichen dabei ein großflächiges und insbesondere auch zielgerichtetes Beheizen des Filtereinsatzes und können darüber hinaus mit Kunststoff umspritzt, insbesondere auch in einem jeweiligen Wandbereich des Gehäuses des Filtereinsatzes eingespritzt sein. Derartige Wärmeleitkörper sind üblicherweise aus einem gut wärmeleitenden Material, beispielsweise aus Metall und können aufgrund ihrer höheren Steifigkeit zusätzlich zu einer Unterstützung der Formgebung und zur Aussteifung des Filtereinsatzes herangezogen werden. Durch eine entsprechende Ausgestaltung der Wärmeleitkörper kann ein gezieltes Beheizen des Filtereinsatzes erreicht werden.

Bei einer vorteilhaften Weiterbildung der erfindungsgemäßen Lösung, weist die Heizeinrichtung zumindest ein elektrisches Heizelement, insbesondere ein PTC-Element, auf. Derartige PTC-Heizelemente (positive temperature coefficient) besitzen üblicherweise stromleitende Materialien, die bei tieferen Temperaturen den Strom besser leiten können als bei hohen Temperaturen. Ihr elektrischer Widerstand vergrößert sich demnach bei steigender Temperatur. Derartige PTC-Elemente können dabei auf entsprechende Temperaturen voreingestellt werden, ab denen ein Beheizen erfolgen soll. Sinkt somit die tatsächliche Temperatur unter die voreingestellte Temperatur ab, beginnt die Heizeinrichtung mit dem Aufheizen des Flüssigkeitsinhaltes im Filtereinsatz, wogegen bei einem Überschreiten der tatsächlichen Temperatur im Filtereinsatz über die vordefinierte Temperatur des PTC-Elementes die Heizeinrichtung ein Beheizen der im Filtereinsatz angeordneten Flüssigkeit einstellt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen erfindungsgemäßen Filtereinsatz in einer Schnittdarstellung,
- Fig. 2: einen erfindungsgemäßen Einsatz mit einem derartigen in Fig. 1 gezeigten Filtereinsatz,
- Fig. 3: einen Tank, insbesondere einen Hamstofftank mit einem eingesetzten Einsatz nach der Fig. 2,
- Fig. 4: eine beheizbare, externe Filtereinrichtung.

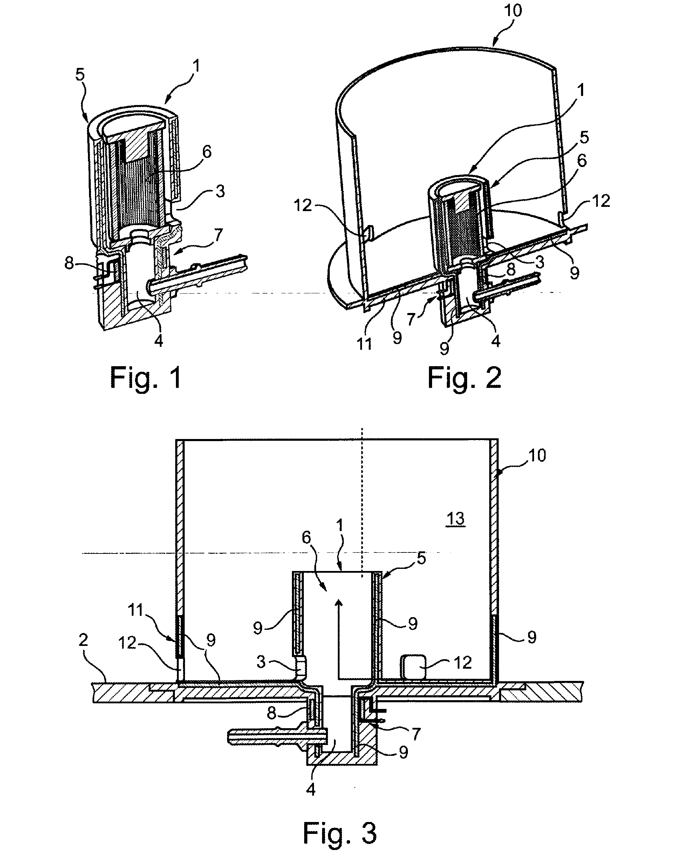

Entsprechen der Fig. 1, weist ein erfindungsgemäßer Filtereinsatz 1 zum Einsetzen in einen Tank 2, insbesondere in einen UREA-Tank 2 (vgl. Fig. 3), das heißt in einen Harnstoff tank, ein zumindest einen Einlass 3 und zumindest einen Auslass 4 aufweisendes Gehäuse 5 auf. Darüber hinaus weist der erfindungsgemäße Filtereinsatz 1 eine Filtereinrichtung 6 (vgl. auch die Fig. 2 und 3) zum Filtern der im Tank 2 gespeicherten Flüssigkeit, beispielsweise Harnstoff, auf. Da der Harnstoff zur Durchführung einer SCR-Reaktion (selektiven katalytischen Reaktion) mit Wasser verdünnt ist, muss die Funktionsfähigkeit des Filtereinsatzes 1 auch bei niederen Temperaturen, bei welchen unter Umständen der im Harnstoff befindliche Wasseranteil gefriert, gewährleistet werden können. Zu diesem Zweck weist der Filtereinsatz 1 eine Heizeinrichtung 7 auf, die das Gehäuse 5 des Filtereinsatzes 1 zumindest im Bereich des Einlasses 3, des Auslasses 4 und der Filtereinrichtung 6 beheizt.

Die Heizeinrichtung 7 weist dabei zumindest ein elektrisches Heizelement 8 auf, welches beispielsweise als sogenanntes PTC-Element (positive temperature coefficient) ausgebildet ist. Dieses zumindest eine Heizelement 8 ist dabei mit Wärmeleitkörpern 9 wärmeübertragend verbunden, die sich in das Gehäuse 5 des Filtereinsatzes 1 zumindest im Bereich des wenigstens einen Einlasses 3 des wenigstens einen Auslasses 4 und der Filtereinrichtung 6 erstrecken. Die Wärmeleitkörper 9 sind dabei mit Kunststoff umspritzt und insbesondere in einen jeweiligen Wandbereich des Gehäuses 5 des Filtereinsatzes 1 eingespritzt. Die Wärmeleitkörper 9 bestehen dabei aus einem gut wärmeleitenden Werkstoff, beispielsweise aus Metall und insbesondere aus Aluminium, und sorgen dadurch für eine schnelle und gleichmäßige Verteilung der vom Heizelement 8 der Heizeinrichtung 7 erzeugten Wärme.

Betrachtet man die Fig. 2, so kann man erkennen, der gemäß der Fig. 1 gezeigte Filtereinsatz 1 auch einen integralen Bestandteil eines in einen Tank 2 eingesetzten Einsatzes 10 bilden kann, wobei in diesem Fall die Heizeinrichtung 7 zusätzlich Wandbereiche 11 des Einsatzes 10, insbesondere im Bereich eines Zulaufs 12 des Einsatzes 10, beheizt. Mit einem derartigen Einsatz 10 ist es möglich, im Vergleich zum gemäß der Fig. 1 gezeigten Filtereinsatzes 1 ein größeres Volumen von Harnstoff mit Heizenergie zu beaufschlagen.

Betrachtet man dabei die Fig. 3, so kann man erkennen, dass ein Kunststoffüberzug der Wärmeleitkörper 9 mit Bezug auf ein Inneres 13 des Einsatzes 10 kleiner ist als nach außen, sodass die von den Wärmeleitkörpern 9 abgestrahlte Heizenergie überwiegend auf die sich im Einsatz 10 befindliche Flüssigkeit, beispielsweise den dort befindlichen Harnstoff, übertragen wird, wogegen der nach außen vergleichsweise dicke Kunststoffüberzug für eine entsprechende Isolierung sorgt.

Bei der Darstellung in der Fig. 3 ist gezeigt, wie der Einsatz 10 der Fig. 2 in eine Wand des Tanks 2 eingesetzt ist, wobei die Dichtheit zwischen dem Tank 2 und dem Einsatz 10 üblicherweise durch ein Verschweißen hergestellt wird. Selbstverständlich ist auch Vorstellbar, dass ein gemäß der Fig. 1 gezeigter Filtereinsatz 1 direkt in eine Wandung des Tanks 2 eingesetzt, und insbesondere dort eingeschweißt wird.

Von besonderem Vorteil des erfindungsgemäßen Einsatzes 1 bzw. des Einsatzes 10 ist, dass dieser eine vergleichsweise große Heizoberfläche in Form der vorhandenen Wärmeleitkörper 9 bereitstellt, diese jedoch durch ihre Integration in die Wandbereiche des Gehäuses 5 bzw. des Einsatzes 10 nur wenig zusätzlichen Bauraumbedarf erfordert. Gleichzeitig kann die Filtereinrichtung 6 großflächig und damit zuverlässig beheizt werden, da die Wärmeleitkörper 9 diese großflächig umgeben. Die Filtereinrichtung 6 kann dabei ein Ringfilterelement aufweisen. Zusätzlich zur Filtereinrichtung 6 wird aber auch noch Einlass 3, der Auslass 4 und ggf. auch ein Zulauf 12 des Einsatzes 10 beheizt, ebenso wie ein Inneres 13 des Einsatzes 10, wodurch ein Gefrieren der wässrigen Harnstofflösung weder im Bereich des Einlasses 3, noch im Bereich der Filtereinrichtung 6 oder des Auslaufs 4 zu befürchten ist. Durch die vergleichsweise dicke Kunststoffschicht an der Außenseite des Einsatzes 10 kann eine Isolierung zur Umgebung und damit ein gerichteter Wärmestrom ins Innere 13 des Einsatzes 10 bewirkt werden. Insbesondere kann durch die erfindungsgemäße Lösung ein partielles Gefrieren des Harnstoffes, beispielsweise im Bereich des Auslasses 4 oder des Einlasses 3 oder der Filtereinrichtung 6, was ebenfalls zu einer kompletten Funktionsuntüchtigkeit führen würde, vermieden werden.

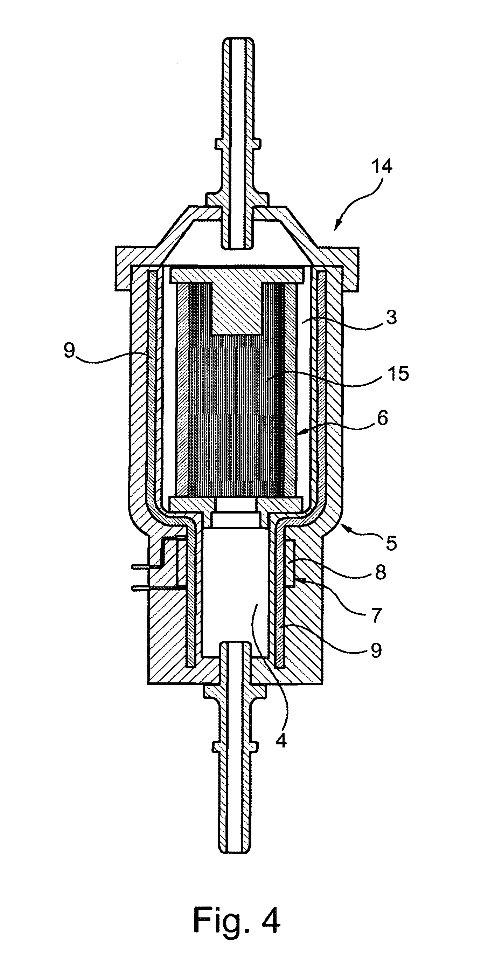

Die Fig. 4 zeigt eine Harnstofffiltereinrichtung (14) mit einem, zumindest einen Einlass (3) und zumindest einen Auslass (4) aufweisenden Gehäuse (5), mit einem Filterelement (15) zum Filtern von Harnstoff und mit einer Heizeinrichtung (7), die das Gehäuse (5) des Filtereinsatzes (1) zumindest im Bereich des wenigstens einen Einlasses (3), des Auslasses (4) und des Filterelements (15) beheizt. Die Harnstofffiltereinrichtung (14) kann dabei extern zu einem UREA-(Harnstoff)tank 2 eingebaut sein. Selbstverständlich muss dabei die Erfindung nicht nur auf eine Harnstofffiltereinrichtung (14) beschränkt sein, sondern kann prinzipiell auch auf andere Flüssigkeitsfiltereinrichtungen übertragen werden.

## Patentansprüche

1. Filtereinsatz (1) zum Einsetzen in einen Tank (2), insbesondere in einen UREA-Tank (Hamstofftank) mit
- einem, zumindest einen Einlass (3) und zumindest einen Auslass (4) aufweisenden Gehäuse (5),
- einer Filtereinrichtung (6) zum Filtern der im Tank gespeicherten Flüssigkeit,
- einer Heizeinrichtung (7), die das Gehäuse (5) des Filtereinsatzes (1) zumindest im Bereich des wenigstens einen Einlasses (3), des Auslasses (4) und der Filtereinrichtung (6) beheizt,
**dadurch gekennzeichnet,**
**dass** das Gehäuse (5) des Filtereinsatzes (1) im Bereich des wenigstens einen Einlasses (3), des wenigstens einen Auslasses (4) und der Filtereinrichtung (6) Wärmeleitkörper (9) aufweist, die wärmeübertragend mit der Heizeinrichtung (7) verbunden sind.

2. Filtereinsatz nach Anspruch 1,
**dadurch gekennzeichnet,**
**dass** die Heizeinrichtung (7) zumindest ein elektrisches Heizelement (8), insbesondere ein PTC-Element, aufweist.

3. Filtereinsatz nach Anspruch 1 oder 2,
**dadurch gekennzeichnet,**
**dass** die Wärmeleitkörper (9) mit Kunststoff umspritzt, insbesondere in einen jeweiligen Wandbereich des Gehäuses des Filtereinsatzes (1) eingespritzt, sind.

4. Filtereinsatz nach einem der Ansprüche 1 bis 3,
**dadurch gekennzeichnet,**
**dass** die Wärmeleitkörper (9) aus einem gut wärmeleitenden Werkstoff, insbesondere aus Metall, beispielsweise aus Aluminium, ausgebildet sind.

5. Tank (2), insbesondere ein UREA-Tank, mit einem Filtereinsatz (1) nach einem der Ansprüche 1 bis 4.

6. Tank nach Anspruch 5,
**dadurch gekennzeichnet,**
**dass** der Filtereinsatz (1) integraler Bestandteil eines in einen Tank (2) eingesetzten Einsatzes (10) ist, wobei die Heizeinrichtung (7) zusätzlich Wandbereiche (11) des Einsatzes (10), insbesondere im Bereich eines Zulaufs (12) des Einsatzes (10), beheizt.

7. Tank nach Anspruch 5 oder 6,
**dadurch gekennzeichnet,**
**dass** ein Kunststoffüberzug der Wärmeleitkörper (9) mit Bezug auf ein Inneres des Einsatzes (10) kleiner ist als nach außen.

8. Tank nach einem der Ansprüche 5 bis 7,
**dadurch gekennzeichnet,**
**dass** der Einsatz (10) mit dem Tank (2) verschweißt ist.

9. Hamstofffiltereinrichtung (14) mit einem Filtereinsatz (1) mit
- einem, zumindest einen Einlass (3) und zumindest einen Auslass (4) aufweisenden Gehäuse (5),
- einem Filterelement (15) zum Filtern von Harnstoff,
- einer Heizeinrichtung (7), die das Gehäuse (5) der Hamstofffiltereinrichtung (14) zumindest im Bereich des wenigstens einen Einlasses (3), des wenigstens einen Auslasses (4) und des Filterelements (15) beheizt, wobei das Gehäuse (5) des Filtereinsatzes (1) im Bereich des wenigstens einen Einlasses (3), des wenigstens einen Auslasses (4) und der Filtereinrichtung (6) Wärmeleitkörper (9) aufweist, die wärmeübertragend mit der Heizeinrichtung (7) verbunden sind.

## Claims

1. A filter insert (1) for inserting into a tank (2), in particular into a UREA tank (urea tank), comprising
- a housing (5) having at least one inlet (3) and at least one outlet (4),
- a filter device (6) for filtering the liquid stored in the tank,
- a heating device (7) which heats the housing (5) of the filter insert (1) at least in the region of the at least one inlet (3), outlet (4), and filter device (6),
**characterized in**
**that** in the region of the at least one inlet (3), the at least one outlet (4), and the filter device (6), the housing (5) of the filter insert (1) has heat conducting bodies (9) which are connected in a heat transferring manner with the heating device (7).

2. The filter insert according to claim 1,
**characterized in**
**that** the heating device (7) has at least one electrical heating element (8), in particular a PTC element.

3. The filter insert according to claim 1 or claim 2,
**characterized in**
**that** the heat conducting bodies (9) are spray coated with plastic, in particular injection molded in a respective wall section of the housing of the filter insert (1).

4. The filter insert according to any one of the claims 1 to 3,
**characterized in**
**that** the heat conducting bodies (9) are made from a material with good thermal conductivity, in particular from metal, for example, from aluminum.

5. A tank (2), in particular a UREA tank, comprising a filter insert (1) according to any one of the claims 1 to 4.

6. Tank according to claim 5,
**characterized in**
**that** the filter insert (1) is integral part of an insert (10) inserted into a tank (2), wherein the heating device (7) heats in addition wall sections (11) of the insert (10), in particular in the region of an intake (12) of the insert (10).

7. Tank according to claim 5 or 6,
**characterized in**
**that** with respect to an interior of the insert (10), a plastic coating of the heat conducting bodies (9) is smaller than towards the outside.

8. Tank according to any one of the claims 5 to 7, **characterized in**
**that** the insert (10) is welded to the tank (2).

9. A urea tank filter device (14), comprising
- a housing (5) having at least one inlet (3) and at least one outlet (4),
- a filter element (15) for filtering urea,
- a heating device (7) which heats the housing (5) of the urea filter device (14) at least in the region of the at least one inlet (3), the at least one outlet (4), and the filter element (15), whereby in the region of the at least one inlet (3), the at least one outlet (4), and the filter device (6), the housing (5) of the filter insert (1) has heat conducting bodies (9) which are connected in a heat transferring manner with the heating device (7).

## Revendications

1. Cartouche filtrante (1) à insérer dans un réservoir (2), notamment dans un réservoir UREA (réservoir d'urée) comportant
- un logement (5) présentant au moins une admission (3) et au moins un échappement (4),
- un dispositif de filtrage (6) pour filtrer le liquide stocké dans le réservoir,
- un dispositif de chauffage (7), qui chauffe le logement (5) de la cartouche filtrante (1) au moins au niveau d'au moins une admission (3), de l'échappement (4) et du dispositif de filtrage (6),
**caractérisée en ce que**
le logement (5) de la cartouche filtrante (1) présente au niveau d' au moins une admission (3), d'au moins un échappement (4) et du dispositif de filtrage (6) des corps de conduction thermique (9), qui sont reliés de manière à transmettre de la chaleur au dispositif de chauffage (7).

2. Cartouche filtrante selon la revendication 1,
**caractérisée en ce que**
le dispositif de chauffage (7) présente au moins un élément chauffant électrique (8), notamment un élément PTC.

3. Cartouche filtrante selon les revendications 1 ou 2,
**caractérisée en ce que**
les corps de conduction thermique (9) sont enrobés de plastique, notamment moulés par injection dans une zone de paroi respective du logement de la cartouche filtrante (1).

4. Cartouche filtrante selon une des revendications 1 à 3,
**caractérisée en ce que**
les corps de conduction thermique (9) sont réalisés dans une matière à bonne conduction thermique, notamment du métal, par exemple de l'aluminium.

5. Réservoir (2), notamment réservoir UREA, comportant une cartouche filtrante (1) selon une des revendications 1 à 4.

6. Réservoir selon la revendication 5,
**caractérisé en ce que**
la cartouche filtrante (1) est partie intégrante d'un insert (10) inséré dans un réservoir (2), dans lequel le dispositif de chauffage (7) chauffe en outre des zones de paroi (11) de l'insert (10), notamment au niveau d'une conduite (12) d'amenée de l'insert (10).

7. Réservoir selon les revendications 5 ou 6,
**caractérisé en ce que**
un revêtement de plastique des corps de conduction thermique (9) par rapport à un intérieur de l'insert (10) est plus petit que par rapport à l'extérieur.

8. Réservoir selon une des revendications 5 à 7, **caractérisé en ce que**
l'insert (10) est soudé au réservoir (2).

9. Dispositif de filtre d'urée (14) comportant avec une cartouche filtrante (1) avec :
- un logement (5) présentant au moins une admission (3) et au moins un échappement (4),
- un dispositif de filtrage (15) pour filtrer de l'urée,
- un dispositif de chauffage (7), qui chauffe le logement (5) du dispositif de filtre d'urée (14) au moins au niveau d'au moins une admission (3), d'au moins un échappement (4) et du dispositif de filtrage (15), le logement (5) de la cartouche filtrante (1) présentant au niveau d'au moins une admission (3), d'au moins un échappement (4) et du dispositif de filtrage (6) des corps de conduction thermique (9), qui sont reliés de manière à transmettre de la chaleur au dispositif de chauffage (7).
